# FASCICULE DE BREVET EUROPEEN

(11) **EP 0 348 321 B1**
(45) Date de publication et mention de la délivrance du brevet: **20.10.1993**
(21) Numéro de dépôt: 89460020.4
(22) Date de dépôt: 22.06.1989
(51) Int. Cl.: H04N 7/00

(54) **Procédé de régulation de débit de données d'assistance à la reconstruction d'images électroniques animées sous-échantillonnées**
Verfahren zur Regelung von Hilfsdatenraten für die Rekonstruktion unterabgetasteter, elektronischer Bilder
Method of regulating the auxiliary data rate for the reconstruction of undersampled electronic images

(30) Priorité: 24.06.1988 FR 8808705
(43) Date de publication de la demande: 27.12.1989
(73) Titulaire: FRANCE TELECOM, 75015 Paris (FR); TELEDIFFUSION DE FRANCE S.A., 92542 Montrouge Cédex (FR)
(72) Inventeur: Henot, Jean-Pierre, F-35510 Thorigne (FR)
(74) Mandataire: Corlau, Vincent

(56) Documents cités:
- WO-A-87/05770
- US-A- 4 605 963
- COLLOQUE TVHD 87, Ottawa, 4-8 octobre 1987, tome 1, pages 6.2.2 - 6.2.28; P. BERNHARD et al.: "Analyse de structures de sous-echantillonnage spatio-temporel d'un signal TVHD en vue de sa transmission dans un canal MAC"
- PROCEEDINGS: ICASSP 87 - 1987 International Conference on Acoustics, Speech, and Signal Processing, Dallas, Texas, 6-9 April 1987 vol. 2 of 4, pages 1051-1054

## Description

Une image de télévision est définie par un certain nombre de paramètres qui représentent l'analyse spatiale et temporelle de cette image (en particulier le nombre d'images par seconde, le nombre de lignes par images et le nombre de points pat ligne).

La bande passante nécessaire pour transmettre une image de TVHD peut atteindre des valeurs de l'ordre de 100 MHz. Ainsi, pour transmettre ces images sur des canaux à bande passante réduite (par exemple des canaux satellite ayant une bande de l'ordre de la dizaine de Megahertz) est-il nécessaire d'appliquer à ces images des techniques de réduction de bande passante.

Il est possible de réduire la bande passante du signal à transmettre en utilisant des techniques adaptatives de filtrage de l'image haute définition. Cette image haute définition filtrée a alors une bande passante de base réduite et peut être ré-échantillonnée à des fréquences plus basses pour la transmission. Les filtrages étant choisis à l'émetteur de façon adaptative, des données d'assistance sont transmises au décodeur afin que celui-ci reconnaisse le traitement choisi au codeur.

Ces données d'assistance consistent donc en un indicateur du traitement choisi mais peuvent également comprendre des vecteurs de mouvement lorsque de la compensation de mouvement est utilisée.

Le débit des données d'assistance dans le canal de transmission est limité à 1 Mbit/s environ.

Par exemple, dans le système de compression d'un signal vidéo décrit dans le document de brevet WO-A-87/05770 (BRITISH BROADCASTING CORPORATION), on choisit, pour chaque bloc d'image, le traitement optimal parmi :
- un filtrage simple (pour les zones stationnaires de l'image) ; et
- une compensation de mouvement (pour les zones en mouvement de l'image).

Dans un tel système, les données d'assistance comprennent :
- une information de choix de traitement ;
- les vecteurs mouvement, si le traitement de compression par compensation de mouvement a été choisi.

La grande quantité d'information que représente ces données nécessite l'utilisation de techniques de réduction de débit.
Il existe une méthode de codage de données d'assistance décrite dans la demande de brevet française conjointe de même date de dépôt aux noms des mêmes déposants, et concernant un "procédé de codage des données d'assistance à la reconstruction d'images électroniques animées sous-échantillonnées".

Une caractéristique du codage des données d'assistance par cette méthode utilisant le codage hiérachique est de présenter un débit variable, alors que le débit du canal est fixe. La régulation de débit des données sortant du codeur de DA (données d'Assistance) s'avère donc indispendable.

Aucune méthode n'a semble-t-il été proposée à ce jour.

L'invention a pour objet de fournir une solution à ce problème.

Plus précisément, l'invention concerne un procédé de régulation du débit de données, notamment des données d'assistance à la reconstruction d'une image électronique appartenant à une séquence d'images, notamment en TVHD, à partir d'un signal d'image comprimé,
le processus de compression du signal d'image consistant à segmenter l'image en blocs sensiblement homogènes de tailles variables dont tous les points peuvent être définis collectivement, les tailles possibles étant classables depuis une taille minimale de blocs élémentaires, en niveaux de segmentation, chaque niveau correspondant au regroupement de quatre blocs adjacents de niveau inférieur,
ledit processus de compression comprenant une étape de sélection, pour chaque bloc élémentaire d'image, d'un traitement optimal parmi plusieurs traitements de compression concurrents réalisés en parallèle, ladite sélection étant effectuée sur un critère de minimisation des distorsions psychovisuelles induites dans l'image reconstruite,
procédé caractérisé en ce qu'on émet les données d'assistance dans un canal d'émission spécifique à débit maximal autorisé,
en ce que lesdits traitements de compression sont caractérisables par le débit de données d'assistance qu'ils génèrent, les traitements comprenant notamment d'une part au moins un traitement à faible consommation de débit de données d'assistance, du type d'un simple filtrage d'image générant un débit de données d'assistance restant toujours inférieur audit débit maximal autorisé, et d'autre part au moins un traitement à forte consommation de débit de données d'assistance, du type d'une compression par compensation de mouvement consistant à associer un vecteur mouvement à chaque bloc pour la reconstruction de la projection du bloc courant dans l'image suivante dans la séquence, générant un débit de données d'assistance pouvant être supérieur audit débit maximal autorisé, et en ce qu'on force le choix de traitement obligatoirement parmi l'un des traitements à faible consommation de débit de données d'assistance, lors de ladite étape de sélection d'un traitement optimal, lorsque le débit desdites données d'assistance, approche ou dépasse ledit débit autorisé de façon que le débit de données d'assistance soit toujours inférieur audit débit maximal autorisé.

De façon avantageuse, ledit débit de données d'assistance correspond à la quantité de données d'assistance émises pour une unité de transmission prédéterminée, ladite unité de transmission prédéterminée étant typiquement constituée par une image de ladite séquence d'image.

Selon un premier aspect de l'invention, le forçage du choix de traitement optimal consiste à imposer le choix d'un traitement à faible consommation de débit de données d'assistance pour une unité de transmission courante, lorsqu'on obtient un dépassement du débit maximal autorisé pour l'unité de transmission précédente. Selon un second aspect de l'invention, le forçage du choix de traitement optimal consiste en une modification du critère de choix de traitement dans le but de préserver sélectivement le choix du traitement à forte consommation de débit de données d'assistance pour les unités de transmission pour lesquelles ledit traitement est le plus optimal.

Dans le cas où ledit choix de traitement optimal est effectué sur un critère de minimisation des distorsions psychovisuelies induites dans l'image reconstruite, cette seconde méthode de forçage consiste à augmenter, diminuer respectivement, artificiellement la valeur des distorsions induites par ledit traitement à forte consommation de débit de données d'assistance.

La première et la seconde méthodes de forçage ne sont pas exclusives l'une de l'autre.

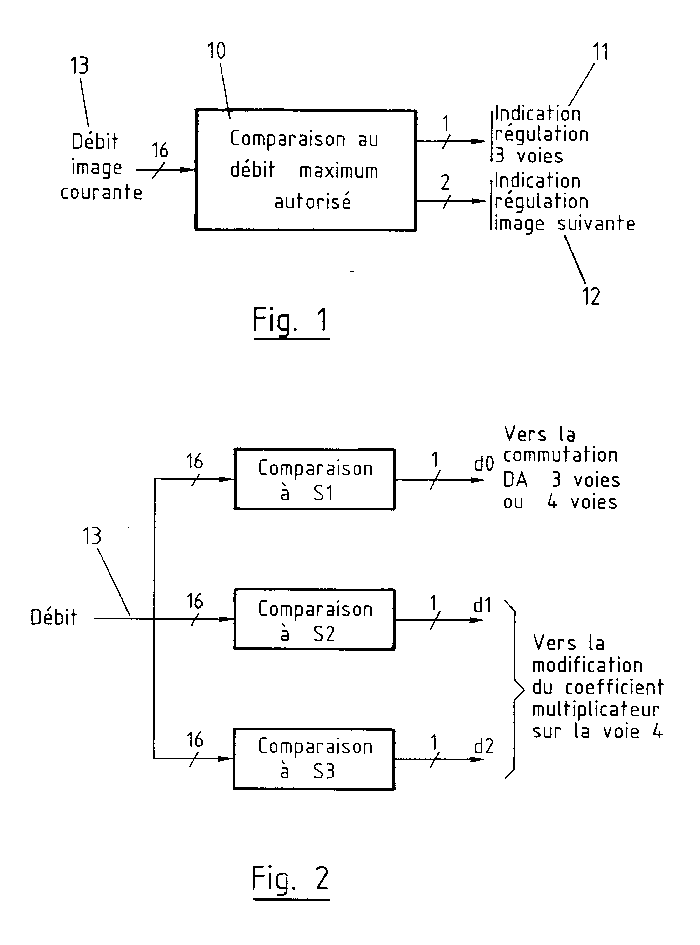

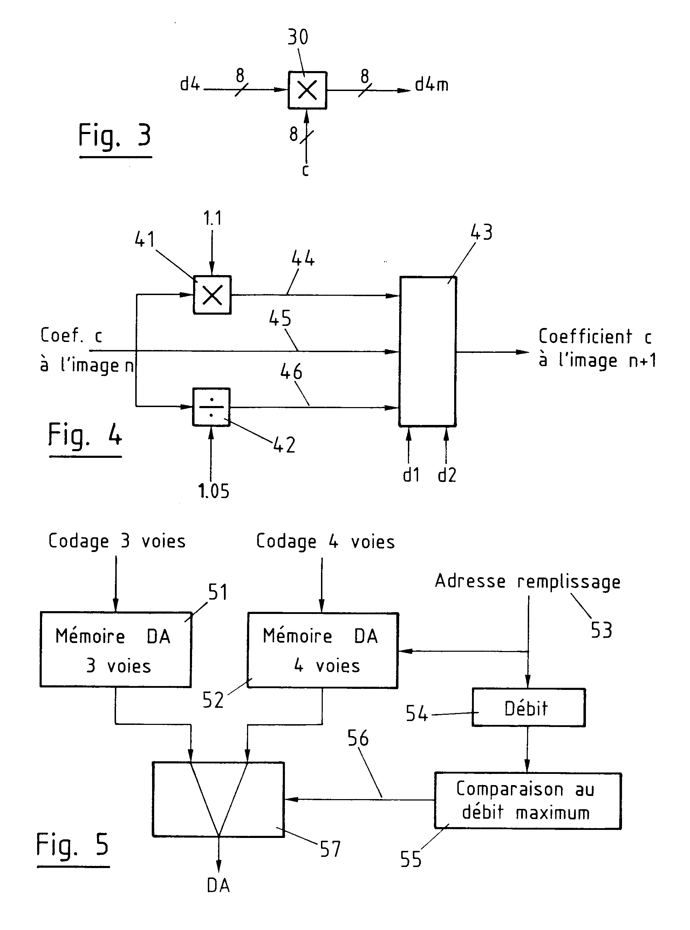

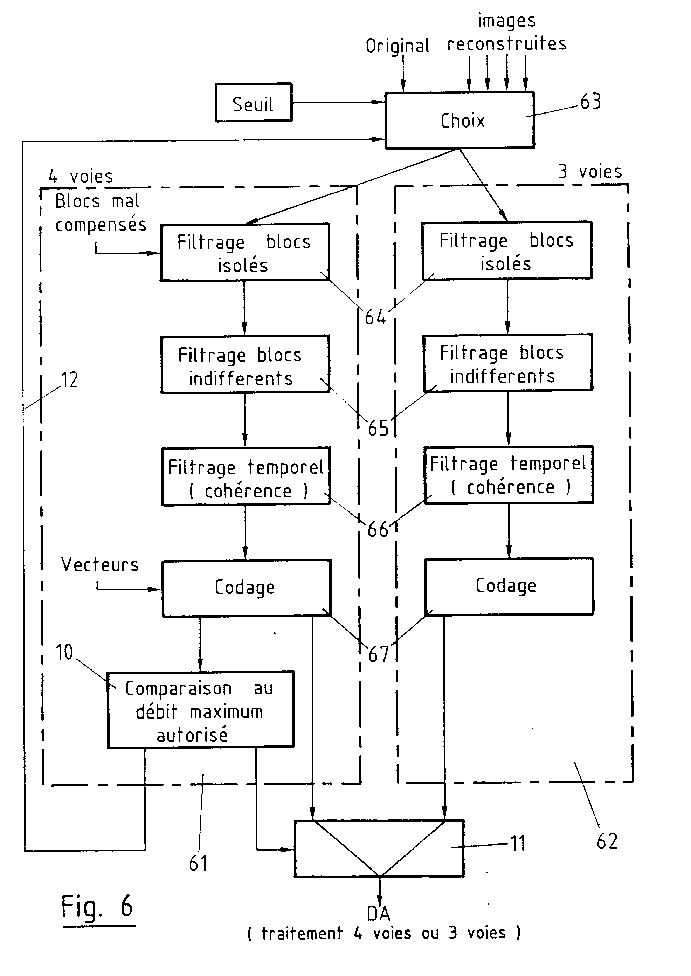

D'autres caractéristiques et avantages de l'invention apparaîtront à la lecture suivante de la description d'un mode de réalisation préférentiel de l'invention, donné à titre illustratif et non limitatif, et des dessins annexés dans lesquels :
. la figure 1 représente les entrée/sorties d'un module de régulation suivant l'invention.
. la figure 2 illustre un mode de traitement de régulation sélectif, étagé en fonction du débit courant des données d'assistance selon l'invention ;
. la figure 3 est un schéma synoptique illustrant les entrées/sortie d'un module de modification de la mesure de distorsion sur voie à compensation de mouvement, selon l'invention ;
. la figure 4 est un schéma synoptique illustrant l'augmentation/diminution artificielles du critére de choix de traitement (valeurs des distorsions induites par le traitement de compression par compensation de mouvement)
. la figure 5 est un schéma synoptique illustrant le principe de régulation brutale de débit, selon l'invention, par commutation forcée vers un traitement de filtrage à faible consommation de débit.
. la figure 6 est un schéma général représentant les deux chaînes de traitement à trois voies et quatre voies respectivement, à partir desquelles sont effectués la mesure de débit et le forçage du choix de traitement selon l'invention. La solution décrite ci-après se rapporte spécifiquement au codage d'une image TVHD pour la transmission dans un canal HD-MAC.

La solution retenue est de choisir en chaque zone d'image quatre types de sous-échantillonnage possibles. Le sous échantillonnage optimal est choisi au codeur et les points sous échantillonnés correspondants sont transmis au décodeur. Celui-ci reçoit en plus les données d'assistance qui lui permettent de reconstruire au mieux l'image HD (haute définition).

Quatre traitements de sous échantillonnage sont possibles :
3 traitements de filtrage linéaire, dont :
- 1 filtrage pour les mouvements nuls (voie 1);
- 1 filtrage pour les mouvements d'amplitude moyenne (voie 2);
- 1 filtrage pour les mouvements d'amplitude élevée (voie3).

Le quatrième traitement est un traitement utilisant de la compensation de mouvement (voie 4).

La méthode de codage des données d'assistance s'applique sur un système à quatre voies dont une à compensation de mouvement. Cette méthode consiste en un codage hiérarchique imbriqué qui segmente l'image de choix de traitement en blocs et surblocs homogènes de même choix de traitement, et de tailles variables. Les vecteurs de mouvement ne sont transmis que pour les blocs qui sont traités en voie à compensation de mouvement.

L'inconvénient d'une telle méthode est que le débit résultant est variable. En particulier il augmente de manière importante lorsque le nombre de vecteurs à transmettre s'accroît fortement (c'est à dire lorsque la voie utilisant la compensation de mouvement est choisie).

Le procédé selon l'invention permet de réguler le débit des données d'assistance. Cette régulation intervient sous deux formes :
- une régulation brutale 11 assurant pour chaque image un débit inférieur au débit du canal : il s'agit de coder l'image en ce cas par un système n'utilisant que des voies à faible consommation de débit (les 3 voies de filtrage linéaire).
- une régulation fine 12 : si à l'image n le débit de la DA est supérieur à un seuil, l'amplitude des erreurs permettant le choix du traitement sur les blocs élémentaires est multiplié par un coefficient supérieur, pour la voie utilisant la compensation de mouvement uniquement, pour l'image n+1. Ces deux possibilités figurent sur la figure 6 :
- comme la possibilité de commuter 11 sur les données d'assistance d'un système 3 voies 62 lorsque le débit 13 des données d'assistance pour le système 4 voies 61 est trop fort par rapport au débit maximum autorisé (10).
- comme une contre réaction 12 intervenant à partir de la comparaison 10 au débit maximal autorisé.

Pour information sur les modules de choix de traitement 63, filtrage des blocs isolés 64 et des blocs indifférents 65, et filtrage temporels 66, on pourra se référer à la demande de brevet française n^{o} 8802650 déposée le 2 Mars 88 aux noms des mêmes déposants.

Le procédé de cette demande de brevet décrit un traitement de sous-échantillonnage utilisé pour chaque élément d'image consistant à retenir un traitement optimal choisi parmi plusieurs traitements disponibles testés en parallèle, l'efficacité de chaque traitement étant mesurée par un critère de distorsion du signal traité par rapport au signal source,
procédé caractérisé en ce que,
- on détermine, au sein de l'image ou de blocs de l'image, des éléments d'images susceptibles d'accepter indifféremment au moins deux traitements distincts de sous-échantillonnage;
- on choisit d'associer à chacun desdits éléments d'images à traitements indifférents, celui desdits traitements indifférents permettant une réduction optimale de débit des données d'assistance.

De façon avantageuse, ladite étape de sélection des éléments d'images à traitements indifférents suivant cete invention antérieure, consiste à rechercher pour chaque élément d'image si il existe un ensemble de traitements, parmi les traitements disponibles, tels que chacun des traitements appartenant audit ensemble de traitements indifférents satisfait à la fois à une condition de distorsion minimale par rapport aux autres traitements disponibles non indifférents, et à une condition d'écart de distorsion seuillé avec chacun des autres traitements indifférents.

Suivant cette invention antérieure, il est également possible de réaliser sur l'image une opération de filtrage d'élimination d'éléments d'image isolés, ledit filtrage consistant à balayer l'image sous-échantillonnée avec une fenêtre mobile de filtrage de taille n x n éléments d'images, et de préférence 3 x 3 éléments d'images, et à modifier le traitement de sous-échantillonnage associé à au moins un élément d'image central pour chaque position sur l'image de la fenêtre mobile, au cas où le traitement associé audit élément d'image central est différent d'un traitement majoritaire et/ou d'un traitement moyen associé aux autres éléments d'images à l'intérieur de ladite fenêtre.

De façon avantageuse, ladite opération de filtrage d'élimination des blocs isolés est effectuée avant l'opération de forçage du choix de traitement, pour les blocs à traitements indifférents.

Le calcul du débit utilisé dans la présente invention est basé sur le codage hiérachique imbriqué 67 décrit dans la demande de brevet française conjointe citée en préambule.

Cette demande de brevet parallèle décrit un procédé de codage des données d'assistance à la reconstruction d'une image électronique appartenant à une séquence d'images, notamment en TVHD, à partir d'un signal d'image comprimé,
le processus de compression du signal d'image consistant à segmenter l'image en blocs sensiblement homogènes de tailles variables ixi dont tous les points peuvent être définis collectivement, les tailles possibles étant classables en niveaux de segmentation, depuis une taille minimale de blocs élémentaires, chaque niveau correspondant au regroupement de quatre blocs adjacents de niveau inférieur,
ledit processus de compression comprenant une étape de sélection, pour chaque bloc élémentaire d'image, d'un traitement optimal parmi plusieurs traitements de compression concurrents réalisés en parallèle, les traitements comprenant notamment d'une part au moins un traitement de filtrage d'image, et d'autre part au moins un traitement de compression par compensation de mouvement,
procédé caractérisé en ce que lesdites données d'assistance comprennent essentiellement, pour chaque bloc, d'une part une information de choix de traitement associée à une information de ségmentation du bloc, et d'autre part, en cas de choix du traitement de compression par compensation de mouvement pour le bloc courant, une information de vecteur mouvement représentative dudit bloc associée à une information de segmentation du bloc,
en ce qu'on réalise dans une première phase un codage hiérarchique croissant, sur au moins deux niveaux de segmentation, pour l'information de choix de traitement, et dans une seconde phase, en cas de choix du traitement à compensation de mouvement pour un bloc non élémentaire identifié en première phase, un codage hiérarchique croissant, sur au moins deux niveaux de segmentation, pour l'information de mouvement,
et en ce qu'on génère lesdites données d'assistance sous commande de moyens de séquencement calés sur une procédure prédéterminée de balayage de l'image, en génèrant sélectivement des informations de segmentation seulement pour les blocs non élémentaires, et en générant sélectivement des informations de choix de vecteur mouvement seulement lors de l'occurrence d'un bloc à traitement optimal par compensation de mouvement.

Selon cette demande de brevet parallèle, lesdites données d'assistance sont avantageusement générées sous forme d'une phrase de longueur variable émise pour chaque surbloc du niveau maximal de segmentation, chaque phrase comprenant au moins l'un des mots suivants:
- un premier mot identifiant la segmentation de choix de traitement dans ledit surbloc;
- au moins un second mot identifiant ledit traitement associé à chaque bloc ixi homogène de niveau maximal;
- un troisième mot identifiant la segmentation de mouvement dans ledit surbloc;
- au moins un quatrième mot identifiant le vecteur mouvement à chaque bloc ixi de niveau maximal à traitement par compensation de mouvement et à vecteur mouvement homogène.

Dans la présente invention, le codage 67 des DA pour le 3 voies 62 est identique à celui du 4 voies 61 et peut être effectué par les mêmes modules en forçant la valeur de l'erreur pour la voie 4 à une valeur arbitrairement élevée dans le module de choix 63.

Le formatage des données d'assitances pour le 3 voies consiste avantageusement à transmettre 2 bits indiquant le traitement choisi entre 3 pour chacun des blocs élémentaires. Le débit résultant est de 25.920 bits (car il y a 12.960 blocs élémentaires dans l'image) et est toujours inférieur au débit du canal (autour de 30 000 bits/image).

Le fait que la DA soit transmise pour 4 voies ou 3 voies est indiqué au décodeur au début de chaque image préférentiellement sous forme d'un bit. Ce bit positionné à "1" indique que le traitement est normal (traitement 4 voies), et à "0" qu'il y a eu régulation (forçage en 3 voies). La transmission de cette information est indispensable car le formatage des données DA est différent dans les deux cas. Le module de comparaison au débit maximum autorisé schématisé en figures 1 et 2 est le module central de la régulation.

Celle ci se fait avantageusement en images, c'est à dire que pour chaque image le débit des données d'assistance reste inférieur à celui du canal. Le débit 13 de l'image n est fourni par le module de codage de la DA 4 voies. Le débit maximum autorisé pour la DA est de 33.360 bits par image.
- si le débit 13 est supérieur à 33360 bits (S1), la DA du 3 voies est transmise et pour l'image n + 1, le coefficient multiplicatif sur la voie 4, C, est multiplié par 1,1 (41).
- si le débit 13 est compris entre 30 Kbits (S2) et 33,360 Kbits (S1) la DA 4 voies est transmise et le coefficient est multiplié par 1,1 (41).
- si le débit 13 est compris entre 25 Kbits (S3) et 30 Kbits (S2) le DA 4 voies est transmise et le coefficient C reste constant.
- si le débit 13 est inférieur à 25 Kbits (S3), la DA 4 voies est transmise et le coefficient est divisé par 1,05 (42). Il reste cependant supérieur à 1.
Les seuils (S1, S2, S3) (33360, 30000, 25000) peuvent être toutes autres valeurs, avantageusement codables sur 16 bits.

Le mode de réalisation illustré en figures 2 et 4 consiste à générer notamment des informations d0, d1, d2 représentatives de la situation du débit courant 13 des données d'assistance par rapport aux seuils S1, S2, S3. Les bits d1 et d2 servent de valeurs de sélection dans un circuit 43 de choix de l'une des voies 44, 45, 46 de multiplication 41, absence de traitement spécifique, et division 42 respectivement, du coefficient c de modification artificielle des distorsions induites sur la voie 4.

En effet, dans le module de choix 63, sont calculées les erreurs sur les voies 1, 2, 3 et 4 qui permettent de faire le choix du traitement optimal : en l'absence de forçage, celui-ci est le traitement induisant la plus faible distorsion dans l'image reconstruite.

L'erreur sur la voie 4 (appelé distorsion d4) est systématiquement multiplié 30 par C, et fournit une distorsion modifiée d4m.

La valeur de C peut être modifiée d'image à image. Les données résultant du codage 3 voies et 4 voies sont stockées dans 2 mémoires
51, 52.
. Les mémoires de DA 3 voies 51 et 4 voies 52 sont avantageusement des FIFO dimensionnées à 64 Kbits. L'adresse de remplissage 54 de la mémoire 4 voies 52 à la fin de l'image donne le débit obtenu 54 et donc l'indication 56 de commutation 57 entre le 3 voies et le 4 voies, par comparaison 55 au débit maximum autorisé.

## Revendications

1. Procédé de régulation du débit de données, notamment des données d'assistance à la reconstruction d'une image électronique appartenant à une séquence d'images, notamment en TVHD, à partir d'un signal d'image comprimé,
le processus de compression du signal d'image consistant à segmenter l'image en blocs sensiblement homogènes de tailles variables dont tous les points peuvent être définis collectivement, les tailles possibles étant classables depuis une taille minimale de blocs élémentaires, en niveaux de segmentation, chaque niveau correspondant au regroupement de quatre blocs adjacents de niveau inférieur,
ledit processus de compression comprenant une étape de sélection, pour chaque bloc élémentaire d'image, d'un traitement optimal parmi plusieurs traitements de compression concurrents réalisés en parallèle ladite sélection étant effectuée sur un critère de minimisation des distorsions psychovisuelles induites dans l'image reconstruite,
procédé caractérisé en ce qu'on émet les données d'assistance dans un canal d'émission spécifique à débit maximal autorisé,
en ce que lesdits traitements de compression sont caractérisables par le débit de données d'assistance qu'ils génèrent, les traitements comprenant notamment d'une part au moins un traitement à faible consommation de débit de données d'assistance, du type d'un simple filtrage d'image générant un débit de données d'assistance restant toujours inférieur audit débit maximal autorisé, et d'autre part au moins un traitement à forte consommation de débit de données d'assistance, du type d'une compression par compensation de mouvement consistant à associer un vecteur mouvement à chaque bloc pour la reconstruction de la projection du bloc courant dans l'image suivante dans la séquence, générant un débit de données d'assistance pouvant être supérieur audit débit maximal autorisé,
et en ce qu'on force le choix de traitement obligatoirement parmi l'un des traitements (11) à faible consommation de débit de données d'assistance, lors de ladite étape de sélection d'un traitement optimal, lorsque le débit (13) desdites données d'assistance approche ou dépasse ledit débit (10) autorisé de façon que le débit de données d'assistance soit toujours inférieur audit débit maximal autorisé.

2. Procédé selon la revendication 1, caractérisé en ce que ledit débit de données d'assistance correspond à la quantité de données d'assistance émises pour une unité de transmission prédéterminée, ladite unité de transmission prédéterminée étant typiquement constituée par une image de ladite séquence d'image.

3. Procédé selon la revendication 1, caractérisé en ce que ledit forçage du choix de traitement optimal consiste à imposer le choix d'un traitement à faible consommation de débit de données d'assistance pour une unité de transmission courante, lorsqu'on obtient un dépassement du débit maximal autorisé pour l'unité de transmission précédente.

4. Procédé selon la revendication 1, caractérisé en ce que ledit forçage du choix de traitement optimal consiste en une modification du critère de choix de traitement dans le but de préserver sélectivement le choix du traitement à forte consommation de débit de données d'assistance pour les unités de transmission pour lesquelles ledit traitement est le plus optimal.

5. Procédé selon la revendication 4, dans le cas où ledit choix du traitement optimal est effectué sur un critère de minimisation des distorsions psychovisuelles induites dans l'image reconstruite, caractérisé en ce que ledit forçage consiste à augmenter, diminuer respectivement, artificiellement la valeur des distorsions induites par ledit traitement à forte consommation de débit de données d'assistance.

6. Procédé selon la revendication 4 ou 5, caractérisé en ce qu'on effectue sélectivement ladite modification du critère de choix de traitement selon un taux choisi parmi au moins deux taux de modification distincts, en utilisant un taux de modification d'autant plus fort que le débit courant de données d'assistance est élevé.

7. Procédé selon l'une quelconque des revendications 1 à 6, caractérisé en ce que lesdits traitements de compression comprennent :
- trois traitements de filtrage linéaire à faible consommation de débit de données d'assistance :
* un filtrage pour les mouvements nuls ;
* un filtrage pour les mouvements d'amplitude moyenne ;
* un filtrage pour les mouvements d'amplitude élevée ;
- un traitement utilisant de la compensation de mouvement à forte consommation de débit de données d'assistance.

8. Procédé selon l'une quelconque des revendications 1 à 7, caractérisé en ce qu'un bit de marquage, émis au début de chacune desdites images, est positionné:
- soit à "0" pour indiquer que le choix de traitement a été forcé parmi l'un des traitements à faible consommation de débit de données d'assistance ;
- soit à "1" dans le cas où le choix n'a pas été forcé.

## Claims

1. Method for the regulation of the throughput rate for data, particularly the data for assistance in the reconstruction of an electronic image belonging to a sequence of images, particularly in HDTV, from a compressed image signal,
the process for compression of the image signal consisting of the segmentation of the image into substantially homogeneous blocks of variable sizes, all the dots of which can be collectively defined, the possible sizes being capable of classification from a minimum size of elementary blocks, in segmentation levels, each level corresponding to the grouping of four adjacent lower-level blocks,
the said compression process comprising a step involving the selection, for each elementary image block, of an optimum treatment amongst several concurrent compression treatments carried out in parallel, the said selection being carried out using a criterion for minimising psychovisual distortions induced in the reconstructed image,
a method characterised in that the assistance data are sent in a specific sending channel with permitted maximum throughput rate,
in that the said compression treatments are capable of being characterised by the throughput rate of assistance data which they generate, the treatments particularly comprising, on the one hands at least one treatment with low consumption of the assistance data throughput rate, of a simple image filtering type generating an assistance data throughput rate which always remains lower than the said permitted maximum throughput rate, and on the other hand at least one treatment with high consumption of the assistance data throughput rate, of a compression by motion compensation type, comprising the association of a motion vector with each block for the reconstruction of the projection of the current block in the following image of the sequence, generating an assistance data throughput rate capable of being greater than the said permitted maximum throughput rate,
and in that the choice of treatment is strictly enforced from amongst one of the treatments (11) with low consumption of the assistance data throughput rate, during the said step of selecting an optimum treatment, when the throughput rate (13) of the said assistance data approaches or exceeds the said permitted throughput rate (10) so that the assistance data throughput rate is always below the said permitted maximum throughput rate.

2. Method according to Claim 1, characterised in that the said assistance data throughput rate corresponds to the quantity of assistance data emitted for one predetermined transmission unit, the said predetermined transmission unit typically comprising one image of the said image sequence.

3. Method according to Claim 1, characterised in that the said enforcement of the choice of optimum treatment consists in imposing the choice of a treatment with low consumption of the assistance data throughput rate for one unit of current transmission, when the permitted maximum throughput rate is exceeded for the preceding transmission unit.

4. Method according to Claim 1, characterised in that the said enforcement of the choice of optimum treatment consists of a modification of the criterion for the choice of treatment with the aim of selectively preserving the choice of the treatment with high consumption of the assistance data throughput rate for the transmission units for which the said treatment is the most optimum.

5. Method according to Claim 4, in the case in which the said choice of the optimum treatment is carried out using a criterion for minimising the psychovisual distortions induced in the reconstructed image, characterised in that the said enforcement consists in respectively increasing or reducing artificially the value of the distortions induced by the said treatment with high consumption of the assistance data throughput rate.

6. Method according to Claim 4 or 5, characterised in that the said modification of the criterion for the choice of treatment is carried out selectively at a rate chosen from amongst at least two distinct modification rates, by using a modification rate which becomes all the greater as the current assistance data throughput rate increases.

7. Method according to any one of Claims 1 to 6, characterised in that the said compression treatments comprise:
- three linear filtering treatments with low consumption of the assistance data throughput rate:
* one filtering for zero motions;
* one filtering for motions of mean amplitude;
* one filtering for motions of high amplitude;
- one treatment using motion compensation with high consumption of assistance data throughout rate.

8. Method according to any one of Claims 1 to 7, characterised in that one indicating bit, emitted at the beginning of each of the said images, is set:
- either at "0" to indicate that the choice of treatment has been enforced from amongst one of the treatments with low consumption of the assistance data throughput rate;
- or at "1" in the case where the choice has not been enforced.

## Patentansprüche

1. Verfahren zur Regelung von Hilfsdatenraten, insbesondere der Hilfsdaten für die Rekonstruktion eines elektronischen Bildes aus einer Bilderfolge, insbesondere bei hochauflösendem Fernsehen, ausgehend von einem komprimierten Bildsignal,
wobei das Bildsignal-Kompressionsverfahren darin besteht, daß das Bild in annähernd homogene Blöcke verschiedener Größen segmentiert wird, wobei alle Punkte dieser Blöcke kollektiv definiert werden können, und wobei die möglichen Größen, ausgehend von einer kleinsten Elementarblockgröße, in Segmentierungsniveaus geordnet werden können, wobei jedes Niveau der Gruppierung von vier benachbarten Blöcken tieferen Niveaus entspricht,
wobei das besagte Kompressionsverfahren für jeden Elementarbildblock einen Auswahlschritt eines optimalen Verfahrens enthält, wobei die Auswahl zwischen mehreren parallel durchgeführten Konkurrenzverfahren und gemäß eines Kriteriums zur Minimierung der im rekonstruierten Bild induzierten psychovisuellen Verzerrungen erfolgt,
dadurch gekennzeichnet, daß die Hilfsdaten über einen spezifischen Sendekanal mit einer maximal zugelassenen Senderate gesendet werden,
daß die besagten Kompressionsverfahren durch die von ihnen erzeugten Hilfsdatenraten charakterisierbar sind, wobei die Verfahren insbesondere einerseits mindestens ein Verfahren mit geringem Hilfsdatenratenverbrauch enthalten, vom Typ einer einfachen Bildfiltrierung, welches eine Hilfsdatenrate erzeugt, die immer unterhalb der besagten zugelassenen Senderate bleibt, und andererseits mindestens ein Verfahren mit hohem Hilfsdatenratenverbrauch von der Art einer Bewegungskompensations-Kompression, die darin besteht, daß jedem Block ein Bewegungsvektor für die Rekonstruktion der Projektion des laufenden Blocks in das folgende Sequenzbild zugeordnet wird, wobei eine Hilfsdatenrate erzeugt wird, die größer sein kann, als die maximal zugelassene Senderate,
und daß die Auswahl, während des besagten Auswahlschritts für ein optimales Verfahren unter einem der Verfahren (11) mit geringem Hilfsdatenratenverbrauch, zwangsläufig erzwungen wird, wenn die besagte Hilfsdatenrate (13) sich der besagten zugelassenen Rate (10) nähert oder sie überschreitet, so daß die Hilfsdatenrate immer unterhalb der besagten maximal zugelassenen Rate bleibt.

2. Verfahren nach Anspruch 1, dadurch gekennzeichnet, daß die besagte Hilfsdatenrate der Menge an Hilfsdaten entspricht, die für eine vorher festgelegte Sendeeinheit gesendet werden, wobei besagte vorher festgestellte Sendeeinheit typischerweise aus einem Bild der besagten Bildsequenz besteht.

3. Verfahren nach Anspruch 1, dadurch gekennzeichnet, daß die besagte Erzwingung der Optimalverfahrensauswahl darin besteht, daß die Auswahl eines Verfahrens mit geringem Hilfsdatenratenverbrauch für eine laufende Sendeeinheit erzwungen wird, wenn ein Überschreiten der maximal zugelassenen Rate für die vorhergehende Sendeeinheit erreicht wurde.

4. Verfahren nach Anspruch 1, dadurch gekennzeichnet, daß die besagte Erzwingung der Optimalverfahrensauswahl in einer Modifizierung des Verfahrensauswahlkriteriums besteht, mit dem Zweck, die selektive Auswahl des Verfahrens mit hohem Hilfsdatenratenverbrauch für diejenigen Sendeeinheiten aufrechtzuerhalten, für welche das Verfahren den höchsten Optimierungsgrad aufweist.

5. Verfahren nach Anspruch 4, für den Fall, daß die besagte Auswahl eines Optimalverfahrens gemäß eines Minimierungskriteriums für die im rekonstruierten Bilde induzierten psychovisuellen Verzerrungen ausgeführt wird, dadurch gekennzeichnet, daß die besagte Erzwingung darin besteht, den Wert der durch das besagte Verfahren mit hohem Hilfsdatenratenverbrauch induzierte Verzerrungen künstlich zu vergrößern, bzw. zu verringern.

6. Verfahren nach Anspruch 4 oder 5, dadurch gekennzeichnet, daß die besagte Modifizierung des Verfahrensauswahlkriteriums selektiv gemäß eines Verhältnisses durchgeführt wird, welches unter mindestens zwei verschiedenen Modifizerungsverhältnissen ausgewählt wird, wobei ein Modifizierungsverhältnis angewandt wird, welches um so stärker ist, je höher die laufende Hilfsdatenrate ist.

7. Verfahren nach einem der Ansprüche 1 bis 6, dadurch gekennzeichnet, daß die besagten Kompressionsverfahren folgendes enthalten:
- drei lineare Filterungsverfahren mit geringem Hifsdatenratenverbrauch:
* eine Filterung für Nullbewegungen;
* eine Filterung für Bewegungen mittlerer Amplitude;
* eine Filterung für Bewegungen großer Amplitude;
- ein Verfahren, welches Bewegungskompensation mit hohem Hilfsdatenratenverbrauch verwendet.

8. Verfahren nach einem der Ansprüche 1 bis 7, dadurch gekennzeichnet, daß eines der am Anfang eines jeden der besagten Bilder gesendeten Markierungsbits an einer der folgenden Stellen positioniert ist:
- entweder bei "0", um anzuzeigen, daß die Verfahrensauswahl unter einem der Verfahren mit geringem Hilfsdatenratenverbrauch erzwungen wurde;
- oder bei "1", falls die Auswahl nicht erzwungen wurde.
